# EUROPEAN PATENT APPLICATION

(11) **EP 1 384 617 A1**
(43) Date of publication of application: **28.01.2004**
(21) Application number: 03016944.5
(22) Date of filing: 25.07.2003
(51) Int. Cl.: B60K 6/02, B62D 11/04

(54) **Simplified electrical motorization of the advance of operating machines fitted with endothermic motor**

(30) Priority: 26.07.2002 IT PD20020205
(71) Applicant: Agrinova di Ceccato Paolo, 35010 S.Ta Giustina in Colle PD (IT)
(72) Inventor: Ceccato, Paolo, 35010 S.TA Giustina in Colle PD (IT)

(57) **Abstract**

It involves the simplified electric motorization for the advance of operating machines powered by endothermic motor (3) characterized by the fact that the electric energy is made available for the motorization of the drive wheel axles only when the endothermic motor (3) is in operation and supplying the mechanical energy necessary for the function of the operating machine on which it is mounted.

## Description

At present, when the power for operating the working parts of an operational machine is derived from an endothermic motor and one wishes to use this power source for the movement of the machine, mechanical or hydraulic transmission elements are used which go to the wheels.

This involves the adoption of kinetic transmission elements (or hydraulic connections) which convey the motion from the power source, as well as levers or control handles with the possible addition of clutch elements for motion engagement or disconnection.

This is the technology normally adopted on self-propelled operating machines particularly in the agricultural sphere.

These systems however often give problems and involve fairly high maintenance costs.

It is common knowledge that in the mechanical type of transmissions, the moving parts require suitable coupling elements in order to reduce friction (bearings, bushings etc) and in the event of gearboxes, they generally need to be maintained in an oil bath.

In this last case, oil sealing rings are required, and even if there is no leakage it is necessary to constantly check the oil level and top up as necessary.

The joints and transmissions need to be protected and need to be regularly checked and lubricated, especially when the machine is used over countryside during periods of drought making it necessary to protect against dust, whilst in wet periods water protection is necessary.

In the event of the breakage or the wear of any transmission element, the repair involves taking the machine to a specialized workshop, the time required for the repair operations varying.

The above comments apply to mechanical transmissions and is even more relevant in the case of hydraulic transmissions.

In this case any leakage in the piping circuits and in the components which generate and use pressure, result in environmental damage caused by pollution.

Transmission cannot be undertaken any other way, as any alternative methods are much less reliable and require greater maintenance (one only has to think of the seasonal maintenance required on all electrical starter machines, and all the problems relating to flat batteries).

The use of electrical circuits is usually avoided in the agricultural operating machine sphere, as there are often serious problems relating to oxidation, and problems caused by humidity, mud etc, which reduce performance levels, requiring constant maintenance.

All the above problems can be resolved by the present patent which cuts out mechanical and hydraulic transmission directly from the motion source and which instead motorizes the drive wheels using electric motors keyed onto the wheel axles without requiring any accumulators or batteries.

The patented system is described below.

From the axis of the endothermic motor which supplies movement to the operational parts (such as those grass cutting or moving parts). a toothed belt transmits the motion to a dynamo which supplies power to two direct current electric motors directly keyed onto the wheel axle, it also being possible for these motors to be fitted with relative reduction gear.

One of the advantages of the present patent is that it is possible to electrically motorize the wheels without the aid of any batteries or accumulators.

A further advantage is that it provides a degree of protection against accidents.

As the electric motors are controlled by button switch, should the operator accidentally fail to operate the buttons, although the endothermic motor and dynamo will continue to run, the driving motion of the machine will immediately come to a halt and the machine will stop.

Another advantage is that it is possible to start up motors with opposite rotation directions thereby obtaining a steering radius equal to zero.

Another advantage is the maintenance simplicity feature.

In the event of a dynamo or wheel motor breakdown the replacement operation is quick and easy.

A further advantage is the fact that the machine is controlled solely by two press button for forward or backward movement.

If the operator does not use the button, the machine remains at a standstill.

A variant of this patent involves the replacement of the dynamo with an alternator which requires an electronic control circuit.

In which case battery accumulators with alternating power delivery function would not be available.

By installing an alternator in place of a dynamo the keyed motors on the drive wheel axles are powered by alternating current (at low voltage) thereby making it possible to regulate their speed and other performance features thanks to the use of alternating current.

Whilst this invention may perhaps seem rather banal, it is however destined to revolutionize the entire drive aspect in the operating machine field.

The above becomes clear on examining the enclosed tables and diagrams.

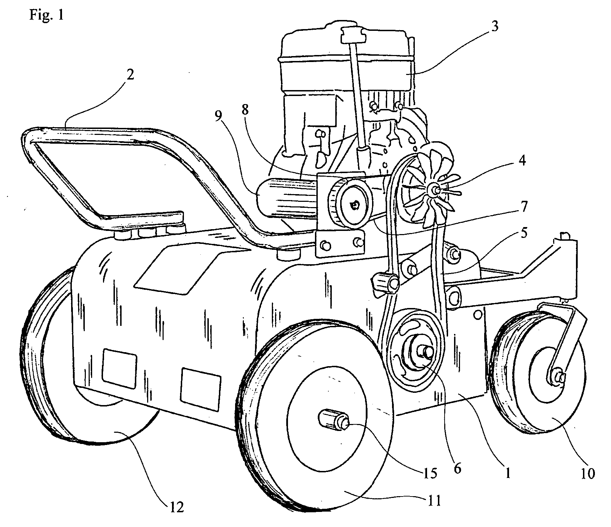

Fig. 1 provides an axonometric view of an operating machine with an endothermic motor applied without protective casing of the pulleys and relative belts for motion transmission to the operator shaft of the machine and to the dynamo. The electric motors keyed onto the traction wheel axles are not visible; while the electrical connections between dynamo and electric motors have not been drawn and neither have the electric forward and back buttons.

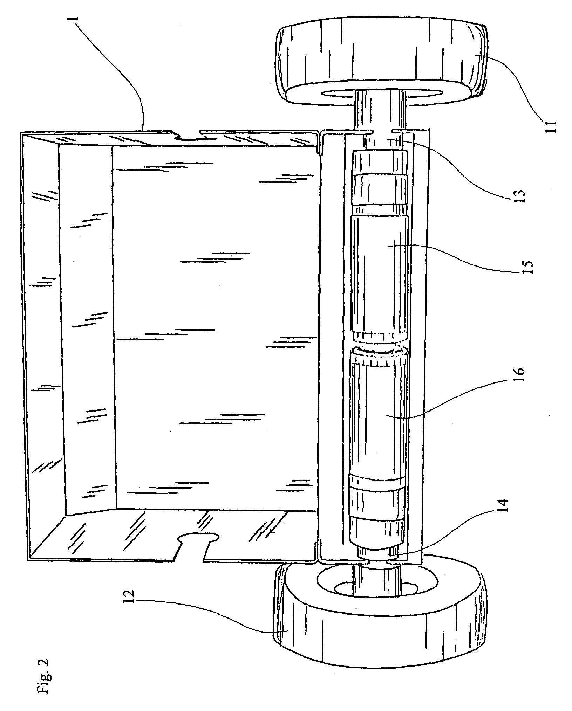

Fig.2 shows a schematic view of the cowling only as seen from under the machine with the application of the two electric motors onto which the traction wheels are keyed.

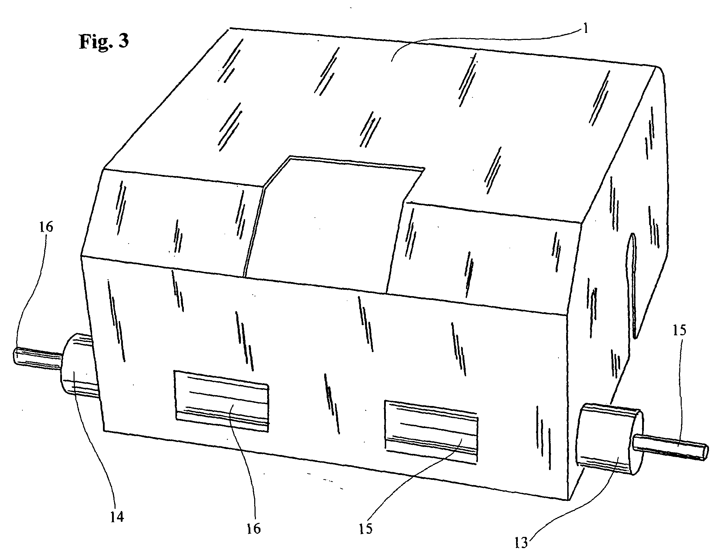

Fig.3 shows a schematic view of the cowling only as seen from above the machine with a glimpse of the electric motors, the axles on which the driving wheels (not shown in the diagram) are to be keyed are also visible protruding on the two sides.

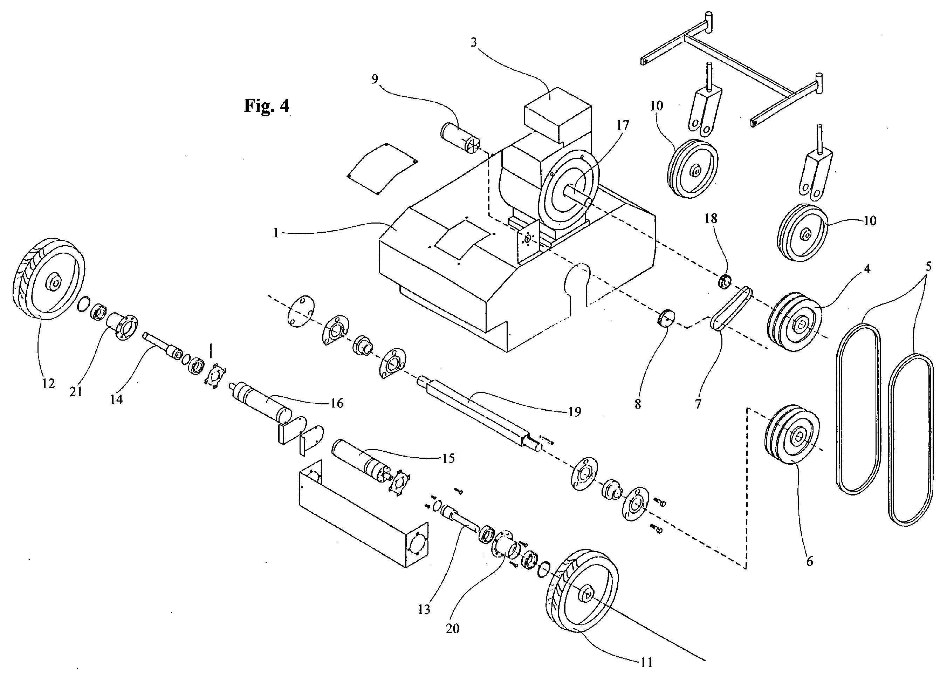

Fig.4 is an exploded view of the various components of the machine subject of the patent.

The endothermic motor 3 mounted on cowling 1 has pulley 18 and pulley 4 keyed onto its motor shaft 17.

Motion is transmitted to dynamo 9 from pulley 18 by means of belt 7 and pulley 8.

The motion is transferred to the operator shaft 19 from pulley 4 by means of belt and pulley 6.

Electric motors 15 and 16 are mounted on cowling 1 and supports 20 and 21 support the drive wheels 11 and 12.

Motion is transmitted by motors 15 and 16 to drive wheels 11 and 12 by means of the keying of axles 13 and 14, which are in turn securely coupled with the axis of electric motors 15 and 16.

This patent cannot be modified even for the purpose of improvements which may be effected by those specialized in this particular field, making use of the know-how of the present invention.

## Claims

1. Simplified electric motorization of the operating machine advance operated by endothermic motor **characterized by** the fact that the electric power available for wheel axle motorization is only available when the endothermic motor is operating to supply the necessary energy for the operating machine on which it is mounted.

2. Simplified electrical motorization of the operating machine advance powered by endothermic motor according to the claims in point 1, due to the fact that for the generation of the electric power necessary for the motorization of the driving wheels neither batteries or accumulators are necessary as the energy is generated by a dynamo (or alternator) which is made to rotate thanks to a pto of the endothermic motor, the primary function of which is to supply mechanical energy to the operating machine on which it is mounted.

3. Simplified electric motorization of the operating machine advance, powered by an endothermic motor according to the claims made in point 1, due to the fact that as the axles of the driving wheels are actually keyed onto the electric motors it moves only if the electric control buttons are pressed and will stop should the operator either accidentally or non-accidentally remove his hands from these buttons.

4. Simplified electric motorization of the operating machine advance powered by an endothermic motor due to the fact that by the motorization of each of the two drive wheel axles with its own motor it is possible to obtain a zero degree steering radius (by running the motors with opposite rotation directions).
